Europäisches Patentamt

European Patent Office

Office européen des brevets

(19)

(11) Publication number: **0 195 860**
**A1**

# EUROPEAN PATENT APPLICATION

(21) Application number: 85200463.9

(22) Date of filing: 27.03.85

(51) Int. Cl.⁴: **B 01 D 13/04**

(43) Date of publication of application: 01.10.86
Bulletin 86/40

(84) Designated Contracting States: **CH DE FR GB IT LI NL**

(71) Applicant: **Taga, Jun, 1-10, Minami Ikuta 7-chome Tama-ku, Kawasaki-shi Kanagawa-ken (JP)**

(72) Inventor: **Taga, Jun, 1-10, Minami Ikuta 7-chome Tama-ku, Kawasaki-shi Kanagawa-ken (JP)**

(74) Representative: **Noz, Franciscus Xaverius, Ir. et al, Boschdijk 155 P.O. Box 645, NL-5600 AP Eindhoven (NL)**

(54) Porous membranes and processes for producing the porous membranes.

(57) A desired number of individual hollow fibers (2) are integrally united and bound in parallel with respective fiber axis, thereby producing a bound multifiber material (7) having a certain thickness. Subsequently, the bound multifiber material is sliced vertically relative to the respective fiber axis by a desired slice means (8), thereby a porous membrane having ultramicropores can be produced.

EP 0 195 860 A1

- 1 -

Porous membranes and processes for producing the
porous membranes

This invention relates to porous membranes and
processes for producing the porous membranes.

The porous membranes are used in many industrial
fields, out of which there are porous membrane
filters as superficial filtering material.

In general, there are three methods for producing
the porous membrane filters.

One is a radiation method, by means of which a
membrane filter is provided with straight pores.
The product's name "NUCLEPORE" of Nuclepore
Corporation, U.S.A. is manufactured by the
radiation method.

Secondly, there is a method for making pores by
vaporizing a solvent with a cast membrane of a
high-molecular substance soluble with the solvent.

Thirdly, there is a method for using slits
generated when stretching linear high-molecular
membrane.

The first radiation method is superior in making uniform a pore diameter, and its permeating flow flux is large, but susceptible to cause clogging in view of membrane's material and thickness.

The second method for making use of casting the solvent has the inconveniences that each pore is not uniform in diameter, lengthy or zig-zag type and its permeating flow flux is small.

The third stretching method has the disadvantage that the area of each slit is diversified and not uniform.

Generally speaking, a precision membrane filter must satisfy the following requirements: 1) high filtering accuracy, 2) high mechanical strength, 3) less dissolution, 4) high chemical resistance, 5) high thermal resistance, 6) large permeating flow flux, 7) inactive biochemically, 8) low cost, 9) long filtering cycle and 10) recycling.

However, any of the conventional membrane filters has advantages as well as disadvantages.

It is a general object of this invention to provide porous membranes and processes for producing various kinds of porous membranes that can conform to respective use purposes.

According to one aspect of this invention, a desired number of individual hollow fibers are integrally united and bound in parallel with respective fiber axis, thereby producing a bound multifiber material having a certain thickness. Subsequently, the bound multifiber material is sliced vertically relative to the respective fiber axis by a desired slice means, thereby a porous membrane can be produced.

According to another aspect of this invention, it is possible to produce a porous membrane having ultramicro-pores by using individual Sea-Islands type multifibers in which a large number of Islands (strands) are distributed in the Sea (binder).

Likewise, a desired number of Sea-Islands type multifibers are integrally united and bound in parallel with respective fiber axis, thereby producing a bound multifiber material. Subsequently, the bound multifiber material is sliced vertically relative to the respective fiber axis by a desired slice means.

Next to this, the Islands in the thus sliced material are removed by an etching treatment, and perforated partially or wholly, thereby a porous membrane having ultramicro-pores can be produced.

This invention will be further described, by way of examples, with reference to the accompanying drawings, in which: -

Fig. 1 is a schematic view of process for producing a porous membrane according to this invention, in which a plurality of hollow fibers

- 4 -

are fed into a binder storing bath and wound up by a drum;

Fig. 2 is a front view of a trapezoidal material flattened after having cut off the cylindrical material in Fig. 1;

Fig. 3 is a pleat-type material which is sliced reciprocally by knives, thereby a large number of porous membranes can be produced in a corrugated form;

Fig. 4 is a front view of a flattened and elongated porous material which has been produced by dividing the material in Fig. 2 into a number of segments through cutting, and bonding those segments with each other;

Fig. 5 is a schematic view of a process for producing a cylindrical porous material by dividing the material in Fig. 4 into a number of trapezoidal segments and bonding those segments with each other;

Fig. 6 is a partially expanded perspective view of a porous membrane produced by the aforesaid steps according to this invention;

Fig. 7 is a section view of a multistrand porous membrane according to this invention;

Fig. 8 is a section view of another example of

- 5 -

the multistrand porous membrane.

Fig. 9 is a schematic view of an etching process of the multistrand porous membrane;

Fig. 10 is a view of the multistrand porous membrane of which each pore is produced in a tapered form.

Preferred examples of this invention will now be descrived with reference to the accompanying drawings.

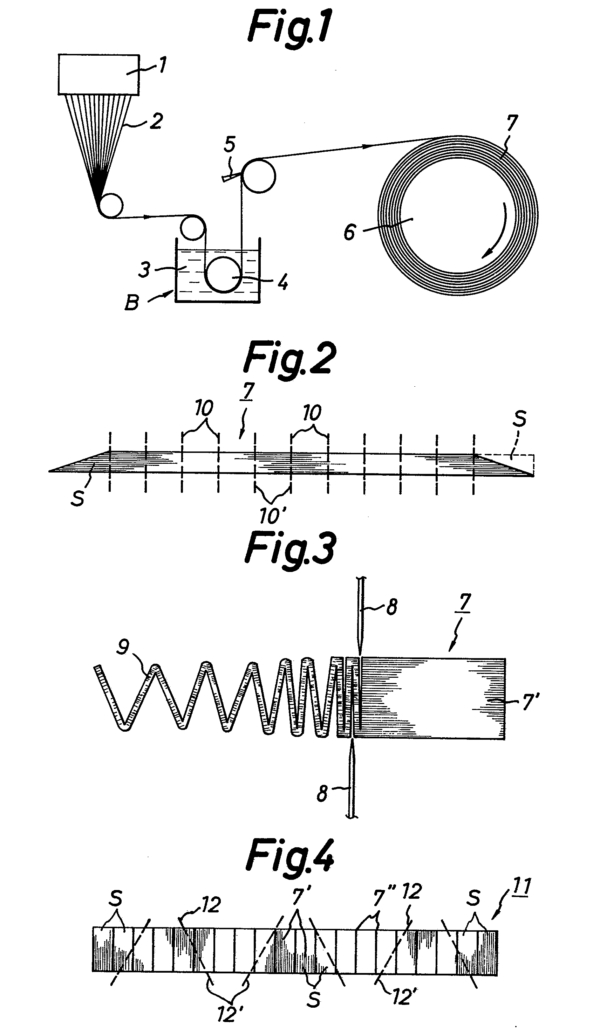

Referring first to Fig. 1, numeral 1 is a die for feeding a plurality of hollow fibers 2 made of polyethylene terephthalate (hereinafter called "PETP"). Each hollow fiber 2 has a pore 2' formed longitudinally (partially illustrated in Fig. 6).

Numeral 3 is an urethane elastomer liquid as a binder which is stored in a bath B. Numeral 4 is a guide roll for guiding the plurality of hollow fiber 2. Numeral 5 is a doctor knife or brush for removing an excessive liquid. Numeral 6 is a drum for winding a material 7 according to this invention, in which the plurality of hollow fibers 2 have been bound in the bath B.

Fig. 1, of course, includes the cooling, withdrawing, stretching, thermal setting and other means in a normal spinning process, but

- 6 -

their mechanism is omitted.

The hollow fibers 2 extruded from the die 1 are guided by the guide roll 4 which is disposed within the urethane elastomer liquid bath B containing a preferred hardening agent, and soaked by the urethane elastomer liquid 3. An excessive liquid on the hollow fibers 2 are removed by the doctor knife 5 and the hollow fibers 2 are wound up regularly by the drum 6. The surface of the drum 6 is coated by an inactive substance such as e.g. polyolefin, fluorinated resin or the like, so that the binder 3 cannot be adhered to the surface of the drum 6. When winding up the hollow fibers 2, any bubble cannot be contained in the binder 3, so that the hollow fibers 2 must be fed regularly in a traverse direction. It is optional to dispose the drum 6 within the binder 3. Thus, there is obtained a material 7 having a substantial thickness and wound up cylindrically.

The material 7 is hardened or semihardened by a hardening agent contained in the binder 3 to the degree that it can be drawn up, and then cut off in order to provide the material 7 with a number of slits. In that case, if necessary, it is optional to heat it and expedite its hardening.

Hardening by the binder must be controlled accurately. It is demanded to pay a particular attention to a reactive heat at the hardening

- 7 -

time.

This means that heat will not raise more than the
softening temperature of the hollow fibers 2.
The hollow fibers 2 bound one after another show
a move of shrinkage in the range of the softening
temperature after thermal setting.  Particularly,
since a larger shrinkage force is concentrated
around a center of the cylindrical material 7,
high attention should be paid so that each pore
of the hollow fibers 2 cannot be collapsed.

Fig. 2 is a front view of a trapezoidal material 7
flattened after having cut off the cylindrical
material in Fig. 1.  It may be heated and
softened in order to convert into a flattened
material.

As shown in Fig. 2, a plurality of strands 7'
are disposed horizontally one after another and
indicated by thin lines.  The trapezoidal
flattened material 7 is cut off at both ends.  It
will be useful to adhere a cut segment s to the
other end in order to avoid waste.

Fig. 3 shows a front view of a pleat-type
material 7, in which it is sliced reciprocally
from the upper side and lower side respectively
by an upper knife 8 and a lower knife 8' while
leaving an end of the material 7, and provided
with a number of notches.  Thus, by extending
such material 7 provided with a number of notches, it becomes a pleat-type porous material 9 according to this invention.

Numeral 2 is one of a large number of pores formed in the pleat-type porous material 7. It is useful to dispose a skin layer (not illustrated) on both upper and lower surfaces of the material 7 in order to reinforce the strength of the both upper and lower surfaces of the material. The skin layer may be made of a preferred resin. The pleat-type porous material 7 is very useful for incorporating it in a cartridge.

In general, when folding a porous membrane filter in a pleat form, a bottom portion of V-shape is provided with shortened pores, while a top portion thereof is provided with enlarged pores. However, according to the example in Fig. 2, any diametrical unbalance of pores does not take place, because the pleat-type membrane is sliced by a knife. Accordingly, the folded porous material 7 in Fig. 2 maintains uniform pore diameter.

Further, it is optional to dispose at least one semispherical concave portion (not illustrated) on the upper and lower surfaces of the drum 6, thereby two semispherical materials consisting of the hollow fibers 2 can be obtained. By bonding the two semispherical materials, the cylindrical material in Fig. 1

- 9 -

can be produced.

Fig. 4 is a view of a flattened and elongated porous material 11 according to this invention. Referring to a method for making the material 11, the flattened material 7 as shown in Fig. 2 is divided into a number of segments a through cutting as shown by a number of vertical dotted lines 10 - 10' and those segments s are jointed with each other so that numerous strands can be disposed vertically. Thus, the flattened material 11 can be obtained.

Numeral 7" as shown by a real line indicates either one of the top and bottom surfaces of the material 7 in Fig. 2.

Subsequently, the material 11 is cut off in a trapezoidal form as shown by a number of dotted lines 12 - 12'.

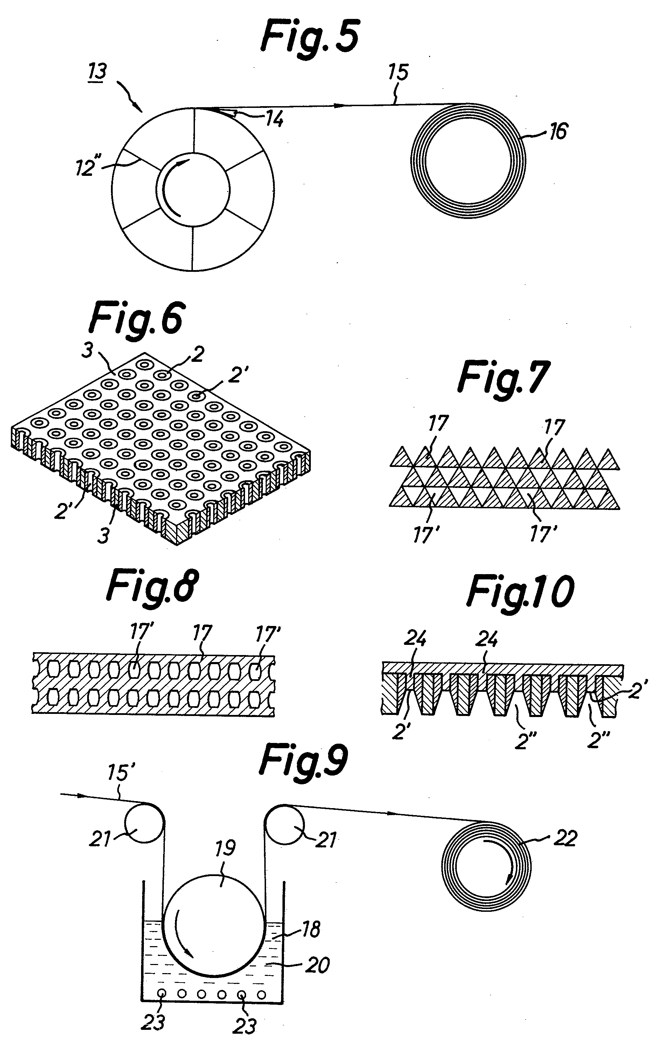

Fig. 5 is a side view of a cylindrical material 13 having a certain thickness, in which a number of cut-off trapezoidal segments are jointed with each other. Numeral 12" is a bonding surface. The numerous strands are disposed in a radial direction. Next to this, the side surface of the cylindrical material 13 is exfoliated continuously by a knife 14 of a slicer (not illustrated), thereby a porous membrane 15 is formed and wound up by a drum 16. When jointing a number of segments cut off in a trapezoidal

0195860

- 10 -

form, the strands exposed on a cut surface of
each segment are dissolved by a solvent, and a
binding area of adjacent segments is widened,
thereby a strong adhesion is obtained.

Fig. 6 is a partially expanded perspective view
of the porous materials 7 and 13 which have been
sliced or exfoliated as shown in Figs. 3 and 5.
In Fig. 6, the hollow fiber 2 as a strand
(hereinafter may be called "Island") has a pore
2' and a plurality of hollow fibers 2 are bound
each other by the binder 3 (hereinafter may be
called "Sea").

It is of course optional to use as a material an
ordinary  bundle of hollow fibers in a roving or
two form.  The hollow fiber 2 as a single strand
has 1.5 denier in thickness (about 12.5µ in outer
diameter) and about 2.5µ in pore diameter.  For
example, the hollow fiber "ESTEROLLA" produced
by a Japanese corporation Toyobo Co., Ltd. has
the aforesaid specification.  It is very
difficult to use the hollow fiber of less than
1.5 denier in thickness, because it is
susceptible to be cut at the spinning process.

If it is demanded to use a membrane filter
having a more minute pore diameter, it is
desirable to use e.g. a porous material having
over 6 pores.  Figs. 7 and 8 are section views
of such porous material, in which numeral 17 is
a composite multistrand material made of a

- 11 -

preferred polymer and numeral 17' is a pore.

Referring to a process for manufacturing the porous material 17, a desired polymer is fused directly below a nozzle and solidified while containing outer air. In this case, the porous material is produced as one film, so that it is uneasy to cut it.

Further, the porous material 17 comprises a plurality of pores adjacent each other, so that the number of pores is increased and the rate of permeability is enhanced, thereby a mechanical strength of the membrane as well as its productivity is increased. It will be also very useful to dispose a skin layer (not illustrated) on the outermost surface of the porous material 17 in order to enhance a good adhesion to the binder.

Further, when either one of the Sea and Islands or both the Sea and Islands are made of any incompatible or inadhesive substance such as non-polar polyolefin, silicone or fluorinated resin, preferably both the Sea and Islands are made of compatible ionomer resin or the like.

Now, an example of using a composite multifiber disclosed in Japanese Examined Patent Publications 44-18369 and 48-22126 will be described.

- 12 -

The composite multifiber has 3 denier (about 18µ$\phi$), in which the Sea (as binder) is made of nylon 6 and the Islands consist of about 80 PETP-made strands. Each strand has 0.015 denier about 1µ$\phi$.

Now, an example of using a composite multifiber having about 80 strands made of polystylene easy for etching and the aforesaid same specification will be referred to hereinafter. After having sliced such composite multifiber in accordance with the process in Figs. 3 or 5, the strands i.e. Islands were dissolved and wiped away by the etching process in Fig. 9, thereby ultramicro-pores have been produced. This technique is claimed in Claim 2 in the last part of this specification.

Referring to Fig. 9, numeral 15' is a matrix prior to the porous material. The matrix 15' is guided by a drum 19 disposed in an etching bath 18. Numeral 20 is a liquid for etching. Numeral 21 is a guide roll, and numeral 22 is a reel for winding up the porous membrane according to this invention. This etching process is the same as that of a membrane filter of the product "NUCLEPORE", for which the radiation method is applied.

The matrix 15' is introduced to the etching bath 18 and the polystylene Islands are dissolved

0195860

- 13 -

by the solvent 20 such as e.g. benzene and converted into the porous membrane.

The solvent stuck to the porous membrane is wiped away, cleaned and dried by a known process.

In order to produce more minute pores, it is also possible to use a multistrand material, in which the Islands are made of a different member other than the high polymer substance as described above. The member is liquid or solid at a normal temperature, and must be fused or liquefied at a spinning temperature. Further, it is incompatible with the Sea, low viscosity at a processing temperature, involatile, easy, for etching and innocuous. For example, it may be polyethylene glycol, high-grade alcohol ester, hydrocarbon oil, silicone oil, low-melting point metal or alloy, glass or the like.

Preferably, a multistrand material having a large number of Islands is suitable for practicing the process of this invention. Namely, the Islands i.e. strands are removed by the etching process according to this invention, thereby the remained pores are utilized as a porous membrane. Accordingly, it will be optional to use a multistrand material having several thousand or several ten thousands Islands.

To enhance the value of the porous membrane according to this invention, it is possible to transform each pore into an unsymmetrical form, i.e. tapered or funnel-shaped form. Such unsymmetrical pores have the advantage of enhancing permeability, prolonging a life span largely and recycling it by washing. Such unsymmetrical pores can be produced by the following process. For example, the Sea is made of nylon 6, while the Islands are hollow fibers made of nylon 6, while the Islands are hollow fibers made of PETP. After having sliced a porous material in accordance with the process in Fig. 3 or Fig. 5, it is introduced into the etching bath 18. The etching bath 18 is, at its bottom, provided with a heat-exchanger 23 for heating purposes.

The solvent 20 which is a heated alkali liquid NaOH can be controlled accurately. Further, the drum 19 is also provided with a heat exchanger (not illustrated) so taht a surface temperature of the drum 19 may be controlled accurately.

The thus formed porous membrane is now soaked in the etching bath 18 having the liquid temperature 80°C (not always limited), and then the PETP-made Islands are dissolved. When carrying out a dissolving process while bonding one surface of the drum (less than 20°C at its surface temperature) with the porous membrane, there takes place a clear temperature difference between the drum roller side and the

- 15 -

liquid side.  Since the dissolving effect is
different, the pore diameter at the liquid side
becomes larger than that at the roller side,
thereby each pore becomes tapered.

Referring to Fig. 10, numeral 24 is a sealing
member for sealing one surface of the porous
member 15'.  The sealing member 24 is not
dissolved by an etching liquid, but must be
eliminated easily.  By sealing one surface of
the porous membrane 15' by means of a roller
coating or a printing technique, a number of
funnel-shaped pores 2" are formed in order to
prevent the etching liquid from penetrating into
the pores 2".  Preferably, the sealing member
24 is starch, water-soluble resin or the like
that can be removed by an ordinary solvent such
as e.g. a cellulouse lacquer.

To protect each void of the funnel-shaped
pores 2" from the penetration of the etching
liquid 20 thereinto, it is desirable to preheat
the porous membrane 15' more than the
temperature of the etching liquid 20 so that the
temperature of the porous membrane 15' can be
decreased in the etching liquid 20.  Thus, the
etching liquid 20 is penetrated into the pores
2" through absorption.  Further, by adjusting
the position of the drum 19 disposed in the
etching bath 18, it is possible to penetrate
the etching liquid into the pores 2".

- 16 -

Now, a process for producing a porous membrane having ultra-micro pores will be described. It can be produced by preparing the Islands made of foamable fiber. In general, as the volume of a foamable material becomes larger, a void at its center grows larger. Accordingly, the volume of it must be small, thereby air-cell becomes small.

For example, a foamable fiber or multifiber in which each strand is no more than 1 mm in diameter may be converted into a porous membrane in accordance with the process in Fig. 3 or 5.

The pores produced by using the foaming effect of the foamable fiber are stretched uniformly in a longitudinal direction by a spinning process, thereby a large number of super minute pores can be obtained. The porous membrane having super minute pores produced by foamed fibers can be treated by the same etching process, thereby the unsymmetrical pores can be produced.

Thus, it is possible to use various kinds of materials in order to practice the process according to this invention.

The etching process according to this invention can be applied repeatedly including a washing treatement. When using a composite multistrand material, desirably the Sea is first of all treated by the etching treatment. In this case, the Islands perform the function of sealing material, thereby the tapered pores can be produced easily.

The binder according to this invention is preferably urethane elastomer, silicone resin, polyvinyl chloride, plastisol, organosol, reactive acrylic resin, liquid nylon, epoxy resin, glass, metal or the like. And, it must be hardened or gelled at a lower temperature than the melting temperature of the Islands.

Preferably, the binder does not contain a volatile solvent, but it is optional to dissolve the surface of the Island by a preferred solvent and bond adjacent Islands with each other. In that case, a remaining solvent is vaporized by drying and the shape of each Island is most preferably a right triangle at section.

When producing a porous membrane having thermal resistance, in which the Islands are made of carbon, glass, metal or the like, the binder may be sintered or fused. In this case, the binder in an emulsion paste or powder form is coated on the surface of the Islands as fibers. As shown in Fig. 2, the material is formed in a flattened plate form, and any volatile substance remaining therein may be dried by heating or vacuum process, so taht any air-cell may not remain in the binder. For example, the following combination of the Islands vs. the

0195860

- 18 -

Sea will be suitable: carbon fiber: 4-ethylene fluoride, glass fiber: 4-ethylene fluoride, high-melting point glass fiber: low-melting point glass, glass fiber or carbon fiber: lead. In the case a density difference between the Islands and the Sea is larger, the aforesaid process may be under no gravity or by using a centrifugal force.

Referring to a method using a centrifugal force, the Islands are wound up on a cylindrical cage as shown in Fig. 1 and it is disposed in a space of a rotary drum for centrifugal casting. Rotating the rotary drum high-speedily, a melted glass, metal or the like as the binder is supplied into the space of the rotary drum so that the cylindrical cage can sink in the binder. Thus, any air existing between the Islands is discharged due to a density difference between the Islands and the Sea, thereby a hybrid porous material in which the Islands and the Sea are tightly bonded together.

Such hybrid porous material can be converted into a porous membrane by the slice process in Fig. 3. It is possible to produce a membrane filter having excellent thermal resistance as well as anticorrosion by plating it with gold, platinum or the like. In this case, the diameter of each pore may be reduced.

In the case the hollow fibers according to this invention are made of a high polymer substance, of course they are used as a material for producing a porous membrane, but not as a spinning material. From this point of view, a high smoothing degree of the surface of the hollow fibers is demanded very much, but its strength is not always necessary. The ordinary hollow fibers are drafted, stretched and heat-set, and their strength is increased by crystallization. However, there is growing the danger that may longitudinal cracks or pilling may occur frequently. Due to such phenomena, passing fluid into the pores is confronted with larger resistance, and some cake may be adhered to the porous membrane. Accordingly, its filtering efficiency is decreased. To eliminate such disadvantages, it is desirable to enlarge the drafting rate of the strands - Islands, make the stretching rate smaller and smoothen the surface of the strands as much as possible. It is accordingly demanded to cool them slower rather than a rapid cooling right below the nozzle. A normal heat-setting is suitable. However, after having sliced the porous membrane, it is optional to heat or heat-set it again. Namely, by making use of the crosslinking to strengthen adhesion between the Islands and the Sea as well as the pore enlarging mechanism by shrinking, the pore diameter may be enlarged or shortened due to shrinking of the Islands and resilience of the Sea. That is, as the resilience of the Sea is stronger than that of

the Islands, the pore diameter is shortened.
On the contrary, as the former is weaker than
the latter, the pore diameter is enlarged.
However, in any case, a stress to enlarge the
outer diameter of the Island is caused, thereby
adhesion of the Islands to the Sea becomes tight
and strong.

If either one of the Islands and the Sea or
both the Islands and the Sea are nonpolar and
difficult for adhesion, it is more advisable to
roughen the surface of the Islands, thereby the
Islands are retainable in the Sea.

Further, in the case that no suitable adhesion
of the Islands to the Sea may be obtained in
view of insufficiency of expansion coefficient,
crystalline shrinking ratio, surface tension
or the like, the Islands may be taken out from
the Sea, thereby the pores will be formed.
However, such phenomenon is advantageous for
this invention, because it is to utilize
positively such pores to form a large number
of pores in the porous membarne. According to
this invention, the Islands are removed by
suction, vibration biaxial orientation or the
like.

Further, when strengthening a suitable bonding
between the Islands and the Sea, preferably the
binder may be made of alloy containing antimony
(or stibium), so that its volume can be expanded at the hardening time. Further, if the Islands are made of metal, the metal may be replaced with alloy having excellent solderability.

Further, when producing a porous membrane filter having pores in which the Islands are made of incompatible liquid, it will be very useful to produce a polymer-blend fiber by blending the incompatible liquid with a desired polymer, and use it as a material. The incompatible liquid is communicated with the Sea in the form of super minute strands.

After this material becomes a membrane, the Islands are dissolved or removed by the etching process. For example, a combination of the Sea made of PETP with the Islands made of polyethylene glicol of which polymerization degree: 20,000 will be suitable for producing such porous membrane.

Further, a porous membrane disclosed in Japanese Examined Patent Publication 46-25267 and Japanese Unexamined Patent Publication 49-118761 will be referred to. The porous membrane was made of polytetrafluoroethylene, and its material was blended with a high-boiling point lubricant. After having extruded such material in a spinning form, it is wound up as shown in Fig. 1 and converted into a matrix. After that, the lubricant is removed in a hot-air furnace, thereby a porous membrane can be produced.

- 22 -

The Islands produced by the aforesaid polymer-blend process is an aggregate of super minute fiber form. The thickness of each Island may be controlled accurately by adjusting the liquid quantity, mixing degree and spinning draft ratio.

As previously described in the background of the invention, the method for making use of casting the solvent has the inconvenience that each pore is not uniform in diameter and shape. To overcome such inconvenience, a solution is mixed with a thickening agent and a filler, thereby viscosity is controlled so that spinning, winding and slicing may be carried out. After a flattened material is produced, it is swelled slowly by adding a preferred solvent. After that, the solvent is vaporized by the conventional method, thereby a precision porous membrane can be produced. Each pore is formed uniformly at a right angle relative to the membrane surface and provided with a straight and short inner circumstance.

The porous membrane of this invention is applied not only for a membrane filter, but also for a waterproof hygroscopic clothing. The diameter of raindrop or mist is about 100 to 2,000μ, so that the pore diameter 3μ to 5μ of a waterproof clothing is quite suitable. Since the porous membrane of this invention has a uniform pore distribution, it may be applied for such

- 23 -

waterproof clothing.

To prevent moisture of the waterproof clothing, it must have the function of water absorption as well as moisture absorption. To satisfy this function, it is possible to produce a waterproof and hygroscopic material by using a soft urethane elastomer as the binder and mixing hollow fibers, water absorptive fibers and hygroscopic fibers all together as the Islands.

Further, it is also possible to produce a desired porous membarne by using the fibers having antistatic, conductive, repellent or magnetic properties.

Further, it is one's option to change the porous membrane into a plate type material having a certain thickness.

The fibers to be used in this invention are mainly long fibers, but may be short ones. The short fibers may be used as sliver or roving. It will also be useful to slice a cylindrical material produced by a method for lining up the short fibers disclosed in Japanese Patent Application Ser. No. 59-2883 (filed January 11th, 1984). In that case, the coating, process of the binder may be carried out in vacuum so that any air-cell may not remain between adjacent fibers.

As described above, it is possible to produce

- 24 -

various kinds of porous membranes and materials that can conform to respective functions by selecting various materials or by combination thereof.

Still further, although a sectional profile of each pore is limited to be circular, it may be such a lengthwise slot that the ratio of a short side vs. a long side is 1 : over 1.5. Such a lengthwise slot is very advantageous for prolonging a filtering cycle.

Although the teachings of this invention have herein been discussed with reference to specific theories and embodiments, it is to be understood that these are by way of illustration only and that others may wish to utilize this invention in different designs or applications.

Preferred examples of this invention will be described hereinafter.

EXAMPLE 1

A polyester tubular fiber having 50μ in outer diameter and 20μ in inner diameter was used as the Island, while a mixture of 100 weight % of a soluble fluorinated resin, 50 weight % of xylene, 50 weight % of n-buthanol 50, 0.25 weight % of P-toluene sulfonic acid as catalyst and 3 weight % of methyl melanine as hardening agent was used as the Sea i.e. the binder. While the former being soaked in the latter and the solvent

- 25 -

being vaporized by a hot air of 60°C temperature, the former was wound up by the drum having 80 mm in thickness. The thus obtained cylindrical material was 10 mm in thickness and 100 mm in width. After drying it for two hours in a gear oven of 80°C at temperature, it was hardened at 140°C after 30 minutes passed. As a result, there was produced a pleat-type porous membrane having 0.05 mm at thickness as shown in Fig. 3. It was observed by a microscope having 200 times magnification, and the result was that each pore in the original tubular fiber was of a right circle and disposed regularly.

EXAMPLE II

The nylon 6 was used as the Sea, while a polystyrene multifiber having 50μ in outer diameter was used as the Islands. The latter having 100 strands was spinned in advance. The thus formed multifiber was soaked in the polyurethane elastomer liquid as the binder and guided by the drum having 80 mm in outer diameter. As a result, there was produced a cylindrical material having 15 mm in thickness and 100 mm in width. It was exposed for 24 hours at a room temperature and hardened. Subsequently, it was sliced in a pleat-type as shown in Fig. 3. Each sliced segment was 0.05 mm in thickness. The surface of the pleat-type material was partially dissolved in the etching bath 18 storing 4.2 N,HCl liquid, in which the superficial temperature of the guide roller 21

0195860

- 26 -

was 10°C and the liquid temperature in the bath 20 was 10°C. After that, it was washed by water and dried by a hot air of 80°C at temperature. After that, the polystyrene Islands were dissolved by benzene in another etching bath and dried by the hot air as described in Example I. Thus, a porous membrane was produced. It was observed by a microscope having 300 times magnification and the result was that a large number of tapered pores were disposed regularly, in which each of smaller tapered pores was about 2µ and each of larger tapered pores was about 5µ.

The figures used in the claims are only meant to explain more clearly the intention of the invention and are not supposed to be any restriction concerning the interpretation of the invention.

- 1 -

Claims:

1.  A porous membarne characterised in that a desired number of individual hollow fibers (2) are integrally united and bound in parallel with respective fiber axis, thereby producing a bound multifiber material (7) having a certain thickness, said bound multifiber material being sliced vertically relative to the respective fiber axis by a desired slice means (5), thereby a porous membrane being able to be produced.

2.  A process for producing a porous membrane characterised in that a desired number of individual hollow fibers (2) are integrally united and bound in parallel with respective fiber axis, thereby producing a bound multifiber material (7) having a certain thickness, said bound multifiber material being sliced vertically relative to the respective fiber axis by a desired slice means (5), thereby a porous membrane being able to be produced.

3.  A porous membrane characterised in that individual Sea-Islands type multifibers in which
a large number of Islands are distributed in the
Sea are used to produce said porous membrane
having ultramicro-pores and a desired number
of Sea-Islands type multifibers are integrally
united and bound in parallel with respective
fiber axis, thereby producing a bound
multifiber material having a certain thickness,

said bound multifiber material is sliced
vertically relative to the respective fiber axis
by a desired slice means, subsequently, the
Islands in the thus sliced material being removed
by a preferred etching treatment, and perforated
partially or wholly, thereby ultramicro-pores
being able to be produced.

4. The porous membrane as claimed in claim 3,
wherein said Islands are strands and said Sea
is a binder.

5. A process for producing a porous membrane
characterised in that individual Sea-Islands type
multifibers in which a large number of Islands
are distributed in the Sea are used to produce
said porous membrane having ultramicro-pores and
a desired number of Sea-Islands type multifibers
are integrally united and bound in parallel
with respective fiber axis, thereby producing
a bound multifiber material having a certain
thickness, said bound multifiber material is
sliced vertically relative to the respective
fiber axis by a desired slice means, subsequently,

0195860

- 3 -

the Islands in the thus sliced material being removed by a preferred etching treatment, and perforated partially or wholly, thereby ultramicro-pores being able to be produced.

6. The process for producing a porous membrane as claimed in claim 5, wherein said Islands are strands and said Sea is a binder.

## Fig.1

## Fig.2

## Fig.3

## Fig.4

0195860

**Fig.5**

**Fig.6**

**Fig.7**

**Fig.8**

**Fig.10**

**Fig.9**

0195860

European Patent
Office

**EUROPEAN SEARCH REPORT**

Application number

EP 85 20 0463

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 915 524 (AKZO)<br>* Claims 1, 11-18; page 21, paragraph 5; figures 1-7, 31 * | 1-6 | B 01 D 13/04 |
| A | US-A-3 234 639 (H.-J. DIETZSCH)<br>* Claim 1, figures 1-4 * | 1,2 | |
| A | PATENT ABSTRACTS OF JAPAN, vol. 8, no. 34, 15th February 1984, page (C-120) (1471); &<br>JP-A-58-197311 (TORAY K.K.)<br>17-11-1983 | 1 | |

TECHNICAL FIELDS
SEARCHED (Int. Cl.4)

B 01 D   13/00
B 01 D   13/01
B 01 D   13/04
A 61 M   1/16
C 02 F   1/44

The present search report has been drawn up for all claims

| Place of search | Date of completion of the search | Examiner |
|---|---|---|
| BERLIN | 28-08-1985 | KUEHN P |